Europäisches Patentamt

European Patent Office

Office européen des brevets

(19)

(11) Veröffentlichungsnummer : **0 016 321**
**B1**

(12) **EUROPÄISCHE PATENTSCHRIFT**

(45) Veröffentlichungstag der Patentschrift :
16.02.83

(51) Int. Cl.³ : **G 01 F   1/12**, G 01 F   1/10

(21) Anmeldenummer : **80100520.8**

(22) Anmeldetag : **02.02.80**

(54) **Durchflussmesser mit einem Rotationskörper.**

(30) Priorität : **26.03.79 DE 2911827**

(43) Veröffentlichungstag der Anmeldung :
**01.10.80 Patentblatt 80/20**

(45) Bekanntmachung des Hinweises auf die Patenterteilung : **16.02.83 Patentblatt 83/07**

(84) Benannte Vertragsstaaten :
**FR GB IT SE**

(56) Entgegenhaltungen :
**DE B 1 033 427**
**DE C 933 169**
**FR A 339 631**

(73) Patentinhaber : **VDO Adolf Schindling AG**
**Gräfstrasse 103**
**D-6000 Frankfurt/Main (DE)**

(72) Erfinder : **Leber, Dieter**
**Oberortstrasse 29**
**D-6236 Eschborn (DE)**

(74) Vertreter : **Könekamp, Herbert, Dipl.-Ing.**
**Sodener Strasse 9**
**D-6231 Schwalbach (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Durchflußmesser mit einem Rotationskörper

Die Erfindung betrifft einen Durchflußmesser mit einem Rotationskörper, der mindestens einen schraubenlinienförmigen Wendel an seinem Außenumfang aufweist und der in einem von einem Gehäuse umschlossenen Strömungskanal, in dem gegebenenfalls stromaufwärts zu dem Rotationskörper ein Strömungsgleichrichter angeordnet ist, mit den stromauf- bzw. stromabwärts axial gerichteten Wellenzapfen seiner Welle in einem ersten bzw. einem zweiten Lager drehbar gelagert ist, wobei der Strömungskanal im Bereich des eingeschlossenen Rotationskörpers mit sich in Strömungsrichtung verjüngendem lichten Querschnitt ausgebildet ist und der Rotationskörper in Strömungsrichtung verschiebbar und in der gewünschten Einstellung feststellbar ist.

Ein derartiger Durchflußmesser ist aus der DE-B 1 033 427 bekannt. Dieser Durchflußmesser besitzt einen konischen Durchflußstutzen, in dem ein Rotationskörper relativ axial verschiebbar angeordnet ist. Zur relativen Verstellung ist an dem Durchflußstutzen axial ein Seilzug befestigt, über den der Durchflußstutzen gegen die Kraft einer Druckfeder verschiebbar ist.

Geführt ist der mit axialen Ausnehmungen an seinen Enden versehene Durchflußstutzen an ortsfesten Kreuzstreben, die durch die Ausnehmungen hindurch ragen. An den Kreuzstreben sind auch die als Spitzenlager ausgebildeten Lager für die Wellenzapfen des Rotationskörpers angeordnet. Die im Strömungsweg angeordnete Druckfeder sowie die axialen Ausnehmungen im Durchflußstutzen führen zu Wirbelbildungen und Staus des Strömungsmittels, die das gleichmäßige Durchströmen des Meßbereichs unkontrollierbar beeinflussen.

Diese Wirbel und Staus verändern ihren Charakter schon bei kleinster Verstellung des Durchflußstutzens, so daß eine genaue Durchflußmessung mit diesem bekannten Aggregat nicht möglich ist.

Der vorliegenden Erfindung liegt daher die Aufgabe zugrunde, möglichst einfache Mittel zur Eichung des Durchflußmessers mit einem Rotationskörpers zu schaffen, die keinen Eingriff in die elektrische Einrichtung des Meßwertgebers bedingen, sondern direkt an dem Durchflußmesser vorgesehen sind, so daß die Drehzahl des Rotationskörpers beeinflußt wird, wobei der Durchflußmesser eine genaue Durchflußmessung gewährleistet.

Diese Aufgabe wird erfindungsgemäß dadurch gelöst, daß der stromaufwärts gerichtete Wellenzapfen in dem ersten Lager in axialer Richtung frei verschiebbar gelagert ist und der stromabwärts gerichtete Wellenzapfen in dem zweiten als Drucklager ausgebildeten Lager in axialer Richtung fixiert gelagert ist, und daß das zweite Lager in schraubenlinienförmigen Führungsmitteln in Strömungsrichtung verstellbar geführt ist.

Diese unkomplizierte Ausbildung gewährleistet eine Durchflußmessung mit einer relativ hohen Meßgenauigkeit.

Das zweite Lager kann selbsthemmend verstellbar sein.

In einer ersten Ausführungsform des Durchflußmessers ist weiterhin vorteilhaft vorgesehen, daß das zweite Lager als zylindrisches Teil mit einem Außengewinde geformt ist, welches in ein Gewindeloch eines Dreibeins eindrehbar ist, das in dem Strömungskanal fest angeordnet ist.

Diese erste Variante ist besonders wenig aufwendig, da nur anstelle eines mit dem Dreibein eine einstückige Einheit bildenden zylindrischen Teils, welches das zweite Lager bildet, dieses Teil mit einem Gewinde in dem Dreibein eindrehbar sein soll.

In einer zweiten Variante des Durchlfußmessers ist vorgesehen, daß das zweite Lager in einem im Strömungskanal angeordneten Dreibein befestigt ist, das äußere Führungsmittel aufweist, die in die im Gehäuse vorgesehenen schraubenlinienförmigen Führungsmittel eingreifen.

In diesem Fall wird also das Dreibein zusammen mit dem zweiten Lager verstellt, indem es in einer schraubenlinienförmigen Bahn gedreht wird, wobei zugleich die axiale Einstellung bewirkt wird. Die Steigung der Schraubenlinienform kann ohne weiteres so gewählt werden, daß eine Selbsthemmung eintritt, d. h., daß sich das Dreibein unter der Einwirkung des von dem Rotationskörper auf das zweite Lager ausgeübten Drucks nicht verstellt.

Im einzelnen kann die zweite Variante weiterhin zweckmäßig die Merkmale aufweisen, daß die schraubenlinienförmigen Führungsmittel von einem Langloch gebildet werden, durch das ein mit einem in dem Gehäuse drehbaren Tubus verbundener Einstellstift hindurchgeführt ist, und daß in dem Tubus das Dreibein befestigt ist.

Bei dieser Ausführungsform wird also durch den Tubus eine Führung des Dreibeins mit dem zweiten Lager in dem Gehäuse bewirkt, zugleich auch eine Abdichtung des Inneren des Strömungskanals zu dem Langloch. Die axiale Verstellung des zweiten Lagers in dem Tubus erfolgt durch Einstellung des von außen zugänglichen Einstellstifts, der im Langloch verschoben wird, wobei ebenfalls eine axiale Verschiebung des zweiten Lagers auftritt.

Die Erfindung wird im folgenden mit zwei Ausführungsbeispielen anhand einer Zeichnung mit 4 Figuren näher erläutert. Es zeigt

Figur 1 eine erste Ausführungsform des Durchflußmessers im Längsschnitt,

Figur 2 die Ausführungsform nach Figur 1 in einer Seitenansicht,

Figur 3 eine Einzelheit einer zweiten Ausführungsform, nämlich das einstellbare zweite Lager in einem Längsschnitt und

Figur 4 die Einzelheit nach Figur 3 in einer Draufsicht entgegen der Strömungsrichtung.

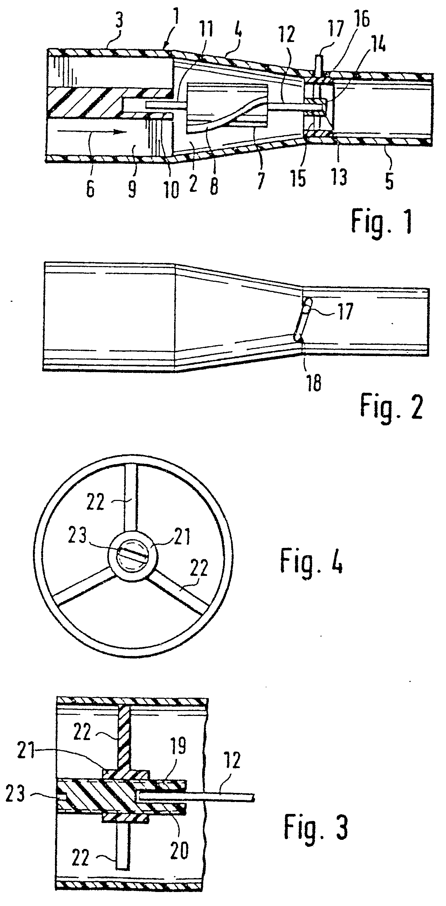

In Figur 1 ist mit 1 ein Gehäuse bezeichnet, das einen Strömungskanal 2 umschließt. Das Gehäuse 1 besitzt einen zylindrischen Teil 3 eines verhältnismäßig großen Durchmessers, der über einen kegelförmigen Teil 4 allmählich in einen zweiten zylindrischen Teil 5 verhältnismäßig kleinen Durchmessers übergeht. In dem kegelförmigen Teil 4 verjüngen sich also die lichten Querschnitte in Strömungsrichtung, die mit dem Pfeil 6 angedeutet ist.

Innerhalb dieses kegelförmigen Teils 4 ist ein Rotationskörper 7 angeordnet, der mehrere schraubenlinienförmige Wendeln aufweist, von denen in Figur 1 der Wendel 8 erkennbar ist.

Der Rotationskörper ist innerhalb des ersten zylindrischen Teils 3 drehbar gelagert, und zwar hier in einem sog. Strömungsgleichrichter 9, der aus zwei rechtwinklig zueinander angeordneten, sich in der Mitte des Strömungskanals kreuzenden Wänden gebildet ist. Das erste Lager in dem Strömungsgleichrichter ist mit 10 bezeichnet und wirkt als reines Drehlager, da es als Langloch ausgebildet ist, in dem sich ein Wellenzapfen 11 des Rotationskörpers 7 frei verschieben kann. Der Wellenzapfen 12 des Rotationskörpers 7 ist hingegen in einem zweiten Lager 13 gelagert, das als Sackloch aus einem zylindrischen Teil 14 ausgespart ist und als Drucklager wirkt. Der zylindrische Teil 14 bildet mit dem Dreibein, durch welches das Medium hindurchströmen kann, eine einstückige Einheit. Das Dreibein ist mit 15 bezeichnet. Es geht in einen Tubus 16 über, der innen in dem zylindrischen Teil 5 des Gehäuses 1 dicht, jedoch drehbar, anliegt.

Fest mit dem Tubus 16 in Verbindung stehend, ist ein Einstellstift 17, der durch ein aus dem Gehäuse 1 ausgespartes schraubenlinienförmiges Langloch 18 (vgl. Fig. 2) hindurchreicht.

Je nach der Einstellung des Einstellstifts 17 in dem Langloch 18 wird das zweite Lager 13 in axialer Richtung eingestellt. Demnach wird der Rotationskörper 7 mehr zu dem Teil des Strömungskanals 2 verschoben, in dem der lichte Durchmesser größer ist und wo relativ geringe Strömungsgeschwindigkeiten herrschen, oder aber zu dem Teil verschoben, der in Figur 1 rechts liegt und in dem bei verhältnismäßig kleinem lichten Durchmesser relativ große Strömungsgeschwindigkeiten vorherrschen. Somit kann durch Verschieben des Einstellstifts 17 in dem Langloch 18 der Proportionalitätsfaktor zwischen dem Durchfluß des Mediums in dem Strömungskanal 2 zu der Drehgeschwindigkeit des Rotationskörpers 7 einreguliert werden.

Die Steigung des Langlochs 18 zu der Längsachse des Strömungskanals 2 ist so gewählt, daß unter dem auf das zweite Lager 13 einwirkenden Druck keine selbsttätige Verstellung des Einstellstifts 17 auftreten kann.

Während die in den Figuren 1 und 2 dargestellte Ausführungsform von außen verstellt werden kann, sieht die in den Figuren 3 und 4 dargestellte Variante eine Einstellmöglichkeit innerhalb des Strömungskanals 2 vor.

Bei der Ausführungsform nach den Figuren 3 und 4, die nur den Bereich des zweiten Lagers 13 an dem stromabwärts liegenden Ende des Wellenzapfens 12 zeigt, ist der Strömungskanal 2, der wie in Figur 1 mit sich in Strömungsrichtung verjüngenden Querschnitten ausgebildet ist, gegenüber der Darstellung in Figur 1 um 180° gedreht, so daß hier die Strömung von rechts nach links verläuft und die von dem Wellenzapfen 12 auf das zweite Lager 13 ausgeübte Druckkraft dementsprechend nach links wirkt.

Die Variante des zweiten Lagers 13 nach den Figuren 3 und 4 zeichnet sich dadurch aus, daß das Langloch in einem zylindrischen Teil 19 ausgespart ist, welches ein Außengewinde 20 aufweist. Das Außengewinde 29 ist in einem Gewindering 21 (vgl. Fig. 4) drehbar, der mit dem Dreibein 22 eine einstückige Einheit bildet. Das Dreibein 22 ist in dieser Ausführungsform fest im Innern des zylindrischen Teils 5 in Figur 1 angebracht.

Die Einstellung des Proportionalitätsfaktors zwischen der Durchflußmenge und der Drehgeschwindigkeit des Rotationskörpers 7 kann in der Ausführungsform nach den Figuren 3 und 4 so getroffen werden, daß — bei geöffnetem Strömungskanal 2 — der zylindrische Teil 19 durch ein in einen Schlitz 23 in dem zylindrischen Teil 19 eingreifendes Werkzeug so verstellt wird, bis bei wieder verschlossenem Strömungskanal 2 bei einer gegebenen Durchflußgröße die gewünschte Drehzahl erreicht wird.

Die zuletzt gezeigte und beschriebene Ausführungsform hat den Vorteil, daß keine versehentliche Verstellung der einmal getroffenen Eichung durch unbeabsichtigtes Betätigen der Einstellmittel zu befürchten ist.

## Ansprüche

1. Durchflußmesser mit einem Rotationskörper, der mindestens einen schraubenlinienförmigen Wendel an seinem Außenumfang aufweist und der in einem von einem Gehäuse umschlossenen Strömungskanal, in den gegebenenfalls stromaufwärts zu dem Rotationskörper ein Strömungsgleichrichter angeordnet ist, mit den stromauf- bzw. stromabwärts axial gerichteten Wellenzapfen seiner Welle in einem ersten bzw. einem zweiten Lager drehbar gelagert ist, wobei der Strömungskanal im Bereich des eingeschlossenen Rotationskörpers mit sich in Strömungsrichtung verjüngendem lichten Querschnitt ausgebildet ist und der Rotationskörper in Strömungsrichtung verschiebbar und in der gewünschten Einstellung feststellbar ist, dadurch gekennzeichnet, daß der stromaufwärts gerichtete Wellenzapfen (11) in dem ersten Lager (10) in axialer Richtung frei verschiebbar gelagert ist und der stromabwärts gerichtete Wellenzapfen (12) in dem zweiten als Drucklager ausgebildeten Lager (13) in axialer Richtung fixiert gelagert ist, und daß das zweite Lager (13) in schraubenlinienförmigen Führungsmitteln in Strömungsrichtung verstellbar geführt ist.

2. Durchflußmesser nach Anspruch 1, dadurch gekennzeichnet, daß das zweite Lager (13) selbsthemmend verstellbar ist.

3. Durchflußmesser nach einem der vorhergehenden Ansprüche, dadurch gekennzeichnet, daß das zweite Lager (13) als zylindrisches Teil (19) mit einem Außengewinde (20) geformt ist, welches in ein Gewindeloch eines Dreibeins (22) eindrehbar ist, das in dem Strömungskanal fest angeordnet ist.

4. Durchflußmesser nach einem der Ansprüche 1 und 2, dadurch gekennzeichnet, daß das zweite Lager (13) in einem im Strömungskanal angeordneten Dreibein (15) befestigt ist, das äußere Führungsmittel aufweist, die in die im Gehäuse (1) vorgesehenen schraubenlinienförmigen Führungsmittel eingreifen.

5. Durchflußmesser nach Anspruch 4, dadurch gekennzeichnet, daß die schraubenlinienförmigen Führungsmittel von einem Langloch (18) gebildet werden, durch das ein mit einem in dem Gehäuse (1) drehbaren Tubus (16) verbundener Einstellstift (17) hindurchgeführt ist, und daß in dem Tubus (16) das Dreibein (15) befestigt ist.

## Claims

1. Flowmeter with a rotational body which has at least one helical spiral on its outer periphery and which is mounted rotatably in a first and a second bearing by means of the shaft journals of its shaft which are directed axially upstream and downstream respectively, in a flow channel which is surrounded by a housing and in which a flow straightener is located if appropriate upstream in relation to the body of revolution, the flow channel being designed in the region of the enclosed body of revolution with a clear cross-section narrowing in the direction of flow, and the body of revolution being displaceable in the direction of flow and being lockable in the desired setting, characterised in that the shaft journal (11) directed upstream in the first bearing (10) is mounted so as to be freely displaceable in an axial direction, and the shaft journal (12) directed downstream in the second bearing (13) designed as a thrust bearing is mounted fixedly in an axial direction, and in that the second bearing (13) is guided adjustably in a directional flow in helical guide means.

2. Flowmeter according to Claim 1, characterised in that the second bearing (13) is adjustable with self-locking.

3. Flowmeter according to one of the preceding claims, characterised in that the second bearing (13) is shaped in the form of a cylindrical part (19) with an external thread (20) which can be screwed into a threaded hole in a tripod (22) arranged firmly in the flow channel.

4. Flowmeter according to one of Claims 1 and 2, characterised in that the second bearing (13) is fastened in a tripod (15) which is located in the flow channel and which has outer guide means which engage into the helical guide means provided in the housing (1).

5. Flowmeter according to Claim 4, characterised in that the helical guide means are formed by a slot (18) through which is guided an adjusting pin (17) connected to a tube (16) rotatable in the housing (1), and in that the tripod (15) is fastened in the tube (16).

## Revendications

1. Débitmètre qui comprend un rotor, présentant au moins une spire hélicoïdale le long de son pourtour et qui est monté dans un canal de circulation de fluide entouré d'une enveloppe, lequel renferme, le cas échéant, en amont du rotor, un redresseur de circulation, ledit rotor comportant un arbre dont les tourillons orientés vers l'amont et vers l'aval sont logés respectivement à rotation dans des premier et second paliers, ledit canal de circulation présentant, dans la région entourant ledit rotor, une section libre décroissante dans la direction de circulation, ledit rotor pouvant en outre, être déplacé dans la direction de circulation et immobilisé dans la position de réglage désirée, débitmètre caractérisé en ce que le tourillon (11) de l'arbre orienté vers l'amont est monté dans le premier palier (10) de façon à pouvoir coulisser librement dans le sens axial, tandis que le tourillon (12) de l'arbre orienté vers l'aval occupe une position axiale fixe dans le second palier qui est en forme de palier de butée, et en ce que ce second palier (13) est guidé de manière à pouvoir se déplacer dans la direction de l'écoulement du fluide, dans des moyens de guidage hélicoïdaux, pour être réglé.

2. Débitmètre selon la revendication 1, caractérisé en ce que le second palier (13) est réglable et à autoblocage.

3. Débitmètre selon l'une quelconque des revendications précédentes, caractérisé en ce que le second palier (13) est un élément cylindrique ayant un filetage extérieur (20) qui peut être vissé dans un trou fileté d'un tripode (22) fixé dans le canal de circulation du fluide.

4. Débitmètre selon l'une des revendications 1 ou 2, caractérisé en ce que le second palier (13) est fixé dans un tripode (15) monté dans le canal de circulation et qui présente des moyens de guidage extérieurs s'engageant dans des moyens de guidage hélicoïdaux prévus dans l'enveloppe (1).

5. Débitmètre selon la revendication 4, caractérisé en ce que les moyens de guidage hélicoïdaux sont formés par une lumière (18), que traverse une goupille de réglage (17) reliée à un tube (16) logé de manière à pouvoir tourner dans l'enveloppe (1), et en ce que le tripode (15) est fixé dans le tube (16).

0 016 321

Fig. 1

Fig. 2

Fig. 4

Fig. 3